# EUROPÄISCHE PATENTANMELDUNG

(11) **EP 4 714 834 A1**
(43) Veröffentlichungstag der Anmeldung: **25.03.2026**
(21) Anmeldenummer: 24201692.1
(22) Anmeldetag: 20.09.2024
(51) Int. Cl.: B64G 1/64

(54) **VORRICHTUNG ZUM LÖSBAREN BEFESTIGEN VON NUTZLAST AN EINEM RAUMFAHRZEUG**

(71) Anmelder: EXOLAUNCH GmbH, 10785 Berlin (DE)
(72) Erfinder: SCHWARZ, Peter, 5023 Salzburg (AT); GRUBER, Johannes, 5020 Salzburg (AT); STERNHARZ, Dmitriy, 10785 Berlin (DE); POLYAK, Sergey, 10405 Berlin (DE)
(74) Vertreter: Manitz Finsterwald Patent- und Rechtsanwaltspartnerschaft mbB

(57) **Zusammenfassung**

Eine Vorrichtung zum lösbaren Befestigen von Nutzlast an einem Raumfahrzeug umfasst einen Träger zur Befestigung an dem Raumfahrzeug und einen Tragring zur Befestigung an der Nutzlast, wobei ein Spannring zum Verspannen des Tragrings mit dem Träger vorgesehen ist.

## Beschreibung

Die vorliegende Erfindung betrifft eine Vorrichtung zum lösbaren Befestigen von Nutzlast an einem Raumfahrzeug, umfassend einen Träger zur Befestigung an dem Raumfahrzeug, einen Tragring zur Befestigung an der Nutzlast, und einen Spannring mit einer Mittelachse, zum Verspannen des Tragrings mit dem Träger.

Derartige Vorrichtungen sind aus dem Stand der Technik bekannt und dienen dazu, die Nutzlast während des Transports fest an das Raumfahrzeug zu koppeln und dann im Weltraum freizugeben. Hierbei stellt sich das grundsätzliche Problem, dass die Nutzlast einerseits fest an das Raumfahrzeug gekoppelt sein soll. Andererseits soll das Freigeben der Nutzlast keine unerwünschten Kräfte auf die Nutzlast ausüben, um unerwünschte Taumelbewegungen und dergleichen nach dem Aussetzen der Nutzlast zu vermeiden. Schließlich ist es wünschenswert, dass derartige Vorrichtungen kompakt bauen, da der zur Verfügung stehende Raum im Bereich des Raumfahrzeugs stets begrenzt ist.

Es ist deshalb die Aufgabe der vorliegenden Erfindung, eine Vorrichtung der vorstehend beschriebenen Art derart weiterzubilden, dass bei kompakter Bauweise eine feste Kopplung von Träger und Tragring erfolgen kann, ohne dass bei Freigabe von Tragring und Träger unerwünschten Kräfte auftreten.

Die Lösung dieser Aufgabe erfolgt durch die Merkmale des Anspruchs 1 und insbesondere dadurch, dass der Spannring entlang seiner Mittelachse aus einer Spannstellung, in der Tragring und Träger miteinander verspannt sind, in einer insbesondere ausschließlich translatorischen Bewegung in eine Freigabestellung bewegbar ist, in welcher der Tragring von dem Träger lösbar ist.

Mit der erfindungsgemäßen Lösung ergibt sich der große Vorteil, dass der Spannring im gespannten Zustand aus seiner Spannstellung in die Freigabestellung überführt werden kann, ohne dass dabei die Vorspannung des Spannrings gelöst werden muss. Da die von dem Spannring ausgeübten Kräfte senkrecht zu seiner Mittelachse, d.h. radial einwärts orientiert sind, können diese Spannkräfte aufrechterhalten bleiben, bis der Spannring entlang seiner Mittelachse aus der Spannstellung in die Freigabestellung überführt wird. Bis zu diesem Zeitpunkt sind jedoch Träger und Tragring durch die Wirkung des Spannrings spielfrei miteinander verbunden. Durch die rein axiale Bewegung des Spannring werden zudem beim Lösen auf den Tragring (und damit auch auf die Nutzlast) keine Kräfte mit einer Komponente in Umfangsrichtung ausgeübt.

Vorteilhafte Ausführungsformen der Erfindung sind in der Beschreibung, der Zeichnung sowie den Unteransprüchen beschrieben.

Nach einer ersten vorteilhaften Ausführungsform kann der Spannring mit an dem Träger montierten Spannhebeln in Wirkverbindung stehen, wobei die Spannhebel den Tragring gegen den Träger verkeilen. Durch Ausüben einer radial einwärts gerichteten Spannkraft kann der Spannring die Spannhebel, die beispielsweise über den Umfang des Tragrings beabstandet angeordneten sind, mit Kraft beaufschlagen, so dass alle Spannhebel eine Spannkraft zwischen Tragring und Träger ausüben. Sofern Anlageflächen der Spannhebel und/oder des Tragrings keilförmig ausgebildet sind, kann hierdurch eine spielfreie Verbindung mit hohen Spannkräften erzielt werden.

Nach einer weiteren vorteilhaften Ausführungsform kann zwischen dem Spannring und jedem Spannhebel ein Kniehebel vorhanden sein. Hierdurch lässt sich die translatorische Bewegung des Spannrings in eine rotatorische Bewegung der Spannhebel umsetzen. Hierbei kann es auch vorteilhaft sein, wenn der Kniehebel in der Spannstellung seinen Totpunkt erreicht, aber nicht überschritten hat. Hierbei lässt sich der Spannring, beispielsweise durch Zusammenziehen an einer Trennstelle, spannen, wodurch die hierdurch erzeugte Spannkraft gleichmäßig auf alle Spannhebel übertragen wird. Da sich die Kniehebel in dieser Spannstellung in ihrer Totpunktstellung befinden, können diese nicht einknicken, sondern übertragen die von dem Spannring ausgeübte Kraft auf die Spannhebel.

Weiterhin kann es vorteilhaft sein, wenn der Spannring mit einem entlang der Mittelachse insbesondere ausschließlich translatorisch bewegbaren Hubring gekoppelt ist, da durch einen solchen Hubring eine Hubbewegung des Hubrings auf den Spannring übertragen werden kann, um diesen ebenfalls translatorisch zu bewegen.

Nach einer weiteren vorteilhaften Ausführungsform kann es vorteilhaft sein, wenn der Kniehebel an seinem einen Ende an dem Spannhebel angelenkt ist und an seinem anderen Ende in Radialrichtung schwimmend in dem Hubring gelagert ist. Durch eine solche in Radialrichtung schwimmend ausgebildete Lagerung des Kniehebels ist gewährleistet, dass eine radial einwärts gerichtete Spannkraft des Spannrings gleichmäßig auf alle Spannhebel übertragen wird.

Nach einer weiteren vorteilhaften Ausführungsform kann der Spannring über Rollen, insbesondere über Rollenpaare, mit dem Hubring in Verbindung stehen. Wenn nämlich ein Kontakt zwischen Spannring und Hubring ausschließlich über Rollen erfolgt, ist einerseits die Reibung zwischen Spannring und Hubring minimiert. Andererseits kann sich der Spannring beim Verspannen - wiederum mit geringer Reibung - in Umfangsrichtung relativ zu dem Hubring bewegen, wenn der Spannring seinen Durchmesser (wenn auch nur geringfügig) verringert. Wenn als Kontakt zwischen Spannring und Hubring Rollenpaare vorgesehen werden, ist zusätzlich einem Auftreten von Kippmomenten entgegengewirkt.

Um eine Hubbewegung des Hubringes zu bewirken, kann es weiterhin vorteilhaft sein, wenn dieser mittels eines Steuerrings bewegbar ist, der insbesondere ausschließlich um die Mittelachse drehbar ist. Ein solcher Steuerring lässt sich auf an sich bekannte Art und Weise vorspannen und durch Betätigen einer Auslösevorrichtung um einen vorbestimmten Winkel drehen. Um diese Drehbewegung in eine translatorische Hubbewegung des Hubringes umzusetzen, kann es weiterhin vorteilhaft sein, wenn der Steuerring über Schwenkhebel mit dem Hubring verbunden ist.

Um den Steuerring zur Überführung des Hubrings und des Spannrings in die Freigabestellung zu bewegen, kann es vorteilhaft sein, wenn der Steuerring in der Spannstellung gegen die Kraft einer oder mehrerer Federn in Umfangsrichtung vorgespannt ist. Ebenso kann es vorteilhaft sein, wenn der Hubring in der Spannstellung gegen die Kraft einer oder mehrerer Federn in Axialrichtung vorgespannt ist. Wird dann der vorgespannte Steuerring durch Betätigen einer Auslösevorrichtung freigegeben, so bewegt sich dieser rotatorisch aufgrund seiner Vorspannung, wodurch der Hubring translatorisch bewegt wird und zwar zusammen mit dem Spannring. Diese Bewegung kann durch die Kraft der zumindest einen Feder unterstützt werden, mit welcher der Hubring in der Spannstellung vorgespannt ist.

Nach einer vorteilhaften Ausführungsform kann der Spannring an einer Trennstelle eine Spannschraube mit zwei gegenläufigen Gewinden aufweisen. Hierdurch kann der Spannring auf einfache Weise durch Verdrehen dieser Schraube gespannt werden, wenn sich dieser in der Spannstellung befindet. Eine solche Spannschraube stellt ein äußerst einfaches und effektives sowie kompaktes Mittel dar, um einen Spannring zusammenzuziehen.

Nach einer weiteren vorteilhaften Ausführungsform kann die Vorrichtung so ausgebildet sein, dass sich der Durchmesser des Spannrings bei einem Übergang von der Spannstellung in die Freigabestellung nicht vergrößert, d.h. der Spannring wird beim Lösen der Verspannung nicht etwa geöffnet, aufgesprengt oder anderweitig getrennt. Vielmehr bleibt der Spannring nach der Freigabe geschlossen und verringert allenfalls seinen Durchmesser etwas. Auch hierdurch werden unerwünschte Einflüsse beim Freigeben der Nutzlast vermieden.

Nach einem weiteren Aspekt betrifft die vorliegende Erfindung auch ein Verfahren zum Befestigen und Lösen eines Tragrings an einem Träger eines Raumfahrzeugs, wobei hierfür eine Vorrichtung der hierin beschriebenen Art verwendet werden kann, jedoch nicht verwendet werden muss. Bei dem Verfahren wird der Tragring, der üblicherweise mit einer Nutzlast verbunden ist, mit dem Träger des Raumfahrzeugs mit Hilfe eines Spannrings verspannt, der über Kniehebel mit Spannelementen in Verbindung steht, die den Tragring gegen den Träger verspannen. Bei den Spannelementen kann es sich um Spannhebel handeln, die verschwenkt werden können. Es kommen jedoch auch andere Spannelemente in Frage, wie beispielsweise Sperrklinken, Sperrriegel, Schiebekeile oder dergleichen. Bei dem Verfahren werden zum Befestigen des Tragrings die Kniehebel mit Hilfe des Spannrings aus einer abgeknickten Stellung in eine Totpunktstellung überführt, so dass der Spannring über die Kniehebel in der Totpunktstellung Spannkräfte auf die Spannelemente übertragen kann. Anschließend kann der Spannring an einer Trennstelle gespannt werden, wodurch sich dessen Durchmesser geringfügig verringert und die Spannkraft der Spannelemente, die diese ausüben, erhöht wird. Wenn im Weltraum die Nutzlast freigegeben werden soll, muss der Tragring von dem Träger gelöst werden. Hierzu werden bei dem Verfahren die Kniehebel aus ihrer Totpunktstellung in eine abgeknickte Stellung überführt, wobei dadurch die Spannelemente von dem Tragring gelöst werden. Die abgeknickte Stellung beim Lösen des Tragrings kann, muss jedoch nicht identisch zu der abgeknickten Stellung vor dem Befestigen des Tragrings sein.

Die Kniehebel können zwei oder auch mehr Gelenkpunkte umfassen. Auch können die Kniehebel aus ihrer Totpunktstellung dadurch in eine abgeknickte Stellung überführt werden, dass der Spannring in einer translatorischen Bewegung parallel zu seiner Mittelachse bewegt wird. Es kommen hier jedoch auch andere Mechanismen in Frage. Beispielsweise können die Kniehebel mit Hilfe eines separaten Mechanismus, d.h. nicht mit Hilfe des Spannrings aus ihrer Totpunktstellung gelöst werden.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht einer Vorrichtung zur lösbaren Befestigung von Nutzlast an einem Raumfahrzeug, wobei in Fig. 1 ein Tragring von einem Träger freigegeben ist;
- Fig. 2: eine perspektivische Schnittansicht entlang der Linie II-II von Fig. 1;
- Fig. 3: eine Fig. 2 entsprechende Ansicht, jedoch in einer Spannstellung;
- Fig. 4: eine perspektivische Teilansicht von Fig. 1 ohne Spannring und Hubring;
- Fig. 5: eine teilweise geschnittene perspektivische Ansicht eines Ausschnitts von Fig. 1 in einer Freigabestellung;
- Fig. 6: die Ansicht von Fig. 5 in einer Spannstellung; und
- Fig. 7: eine Draufsicht auf die Schnittfläche von Fig. 2, jedoch in einer Spannstellung.

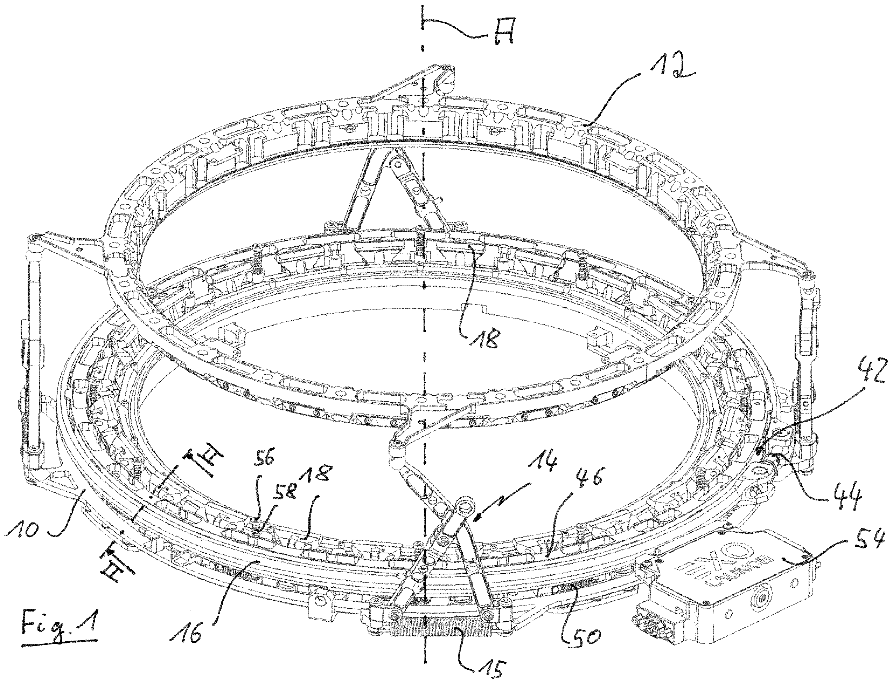

Fig. 1 zeigt eine perspektivische Ansicht einer Vorrichtung zum lösbaren Befestigen von Nutzlast (nicht dargestellt) an einem Raumfahrzeug (ebenfalls nicht dargestellt). Die Vorrichtung weist einen Träger 10 zur Befestigung an dem Raumfahrzeug sowie einen Tragring 12 zur Befestigung an der Nutzlast auf. Über einen geeigneten Auswurfmechanismus kann der Tragring 12 mit der daran befestigten Nutzlast ausgeworfen werden, nachdem der Tragring von dem Träger freigegeben worden ist.

Bei der dargestellten Ausführungsform umfasst die Auswurfeinrichtung mehrere über den Umfang des Trägers 10 verteilt angeordnete Scherenhebel 14, die von Federn 15 in die in Fig. 1 dargestellte Position gebracht werden können. Der Tragring 12 ist dabei jeweils an einem äußeren freien Ende eines Arms des Scherenhebels aufliegend gelagert, so dass Tragring 12 mit daran befestigter Nutzlast im Weltraum von diesen freien Enden abheben kann.

Es sei darauf hingewiesen, dass der dargestellte Auswurfmechanismus rein beispielhaft ist und dass verschiedenste Mechanismen in Frage kommen, die dafür sorgen, dass der Tragring nach Freigabe von dem Träger wegbewegt wird, beispielsweise eine zentrale Schraubenfeder.

Zum Transport in den Weltraum muss der Tragring mit dem Träger 10 fest und spielfrei verbunden sein. Hierzu weist die dargestellte Vorrichtung einen Spannring 16 mit einer Mittelachse A auf, der zum Verspannen des Tragrings 12 mit dem Träger 10 dient.

Bei dem dargestellten Ausführungsbeispiel sind Träger 10 und Tragring 12 kreisringförmig mit einer gemeinsamen Mittelachse A ausgebildet. Es versteht sich jedoch, dass grundsätzlich auch andere Ringformen in Betracht kommen und dass der Träger 10 auch andere Bauformen aufweisen kann, solange gewährleistet ist, dass der Tragring 12 mittels des Spannrings 16 an dem Träger 10 lösbar befestigt werden kann.

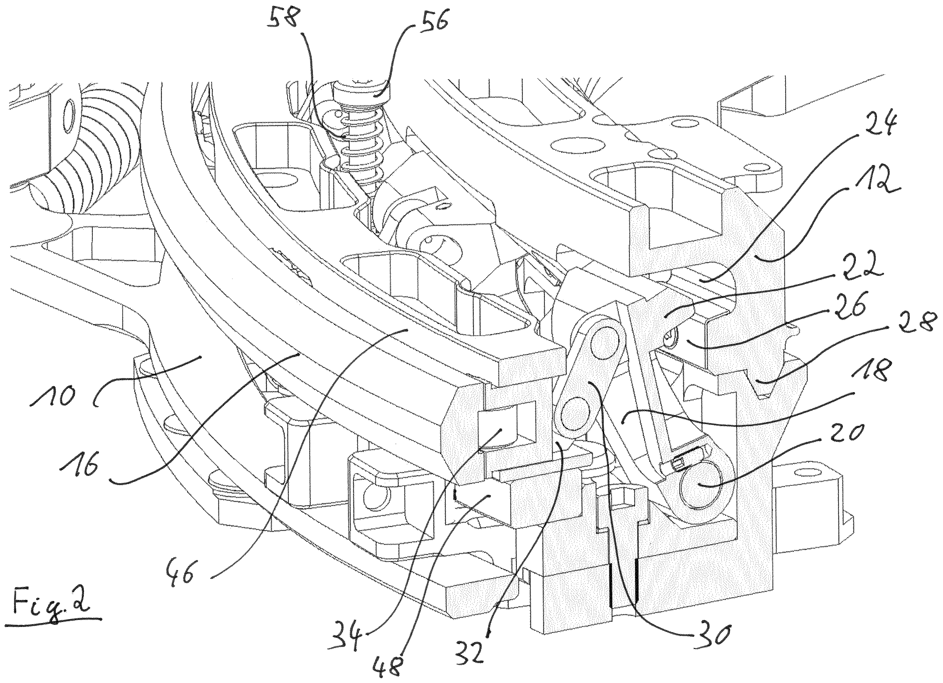

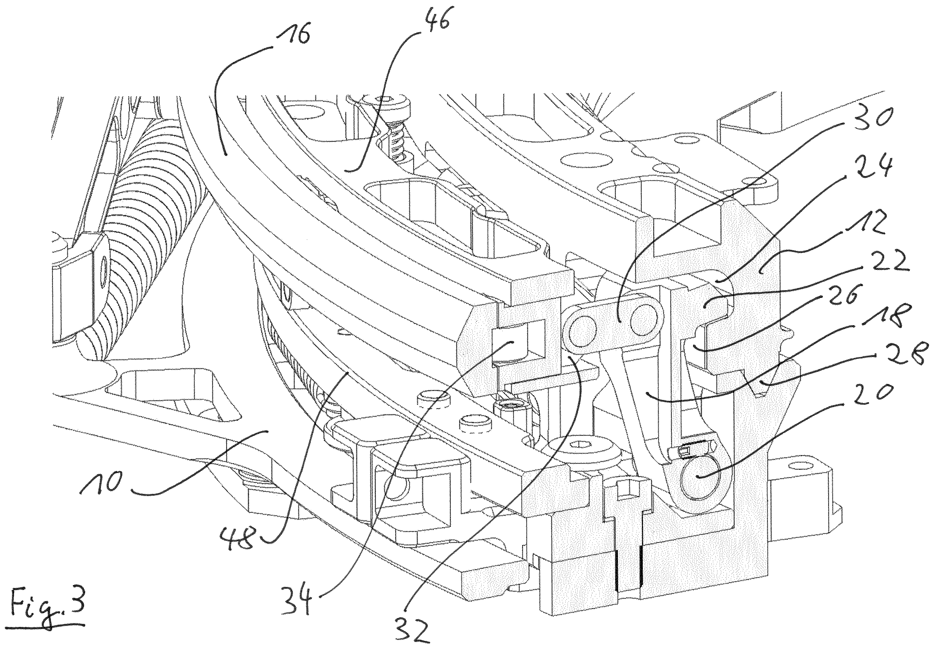

Zur Befestigung des Tragrings 12 an dem Träger 10 sind an dem Träger 10 Spannhebel 18 montiert, die jeweils an ihrem unteren Ende auf tangential orientierten Wellen 20 gelagert sind (vgl. Fig. 2 und 3). Das entgegengesetzte obere Ende jedes Spannhebels 18 ist hingegen mit einem sich in Radialrichtung erstreckenden Verriegelungsvorsprung 22 versehen, der in eine zugehörige Verriegelungsaussparung 24 des Tragrings 12 einschwenkbar ist. In der Verriegelungsaussparung 24 kann eine reibungsvermindernde Gleitauflage 26 für die Auflagefläche des Spannhebels 18 aufgebracht oder angebracht sein. Auch sind die Auflageflächen zwischen Verriegelungsvorsprung 22 und Tragring 12 keilförmig ausgebildet (schräg zu einer zur Mittelachse A orthogonalen Ebene orientiert), so dass bei Einschwenken der Spannhebel 22 in die Verriegelungsaussparung 24 eine senkrecht nach unten in Richtung des Trägers 10 gerichtete Spannkraft auf den Tragring 12 ausgeübt wird.

Wie die Fig. 2 und 3 weiterhin verdeutlichen, weist der Tragring 12 an seiner Unterseite einen Ringflansch 28 mit V-förmigem Querschnitt auf, der sich in eine hierzu komplementär ausgebildete Ringnut des Trägers 10 einfügt, um einen stabilen Sitz des Tragrings 12 auf dem Träger 10 zu gewährleisten. Es versteht sich, dass hier auch andere Ausgestaltungen möglich sind, um einen festen Sitz des Tragrings 12 auf dem Träger 10 sicherzustellen, beispielsweise einzelne Zapfen, Vorsprünge, Vertiefungen oder dergleichen.

Fig. 2 und Fig. 3 verdeutlichen weiterhin, dass der Spannring 16 nicht direkt an dem Tragring 12 oder dem Träger 10 anliegt, um diese miteinander zu verspannen. Vielmehr wirkt der Spannring 16 bei dem dargestellten Ausführungsbeispiel mittelbar auf den Tragring 12, nämlich über die Spannhebel 18, die jeweils über einen Kniehebelmechanismus 30, 32 mit dem Spannring 16 gekoppelt sind. Jeder Kniehebel umfasst einen Schwenkhebel 30, der mit seinem Ende am oberen Ende des Spannhebels 18 angelenkt ist. Das andere Ende des Schwenkhebels 30 ist gelenkig mit einer Rollenaufnahme 32 verbunden, die ebenfalls Bestandteil des Kniehebelmechanismus ist.

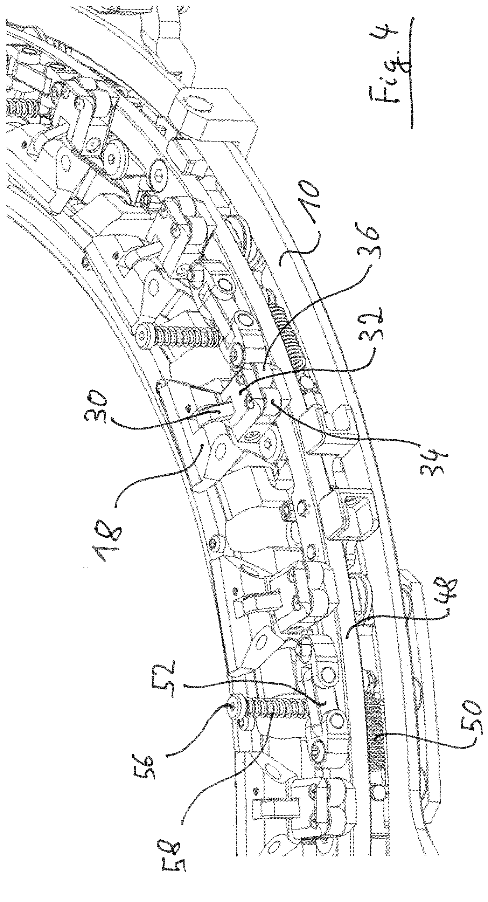

Fig. 4 zeigt perspektivisch die Anbindung der Rollenaufnahme 32 über den Schwenkhebel 30 an den Spannhebel 18, wobei erkennbar ist, dass die Rollenaufnahme 32 jeweils zwei Rollen 34 und 36 lagert, die über parallel zur Mittelachse orientierte Rollenachsen an der Rollenaufnahme 32 befestigt sind. Wie dabei die

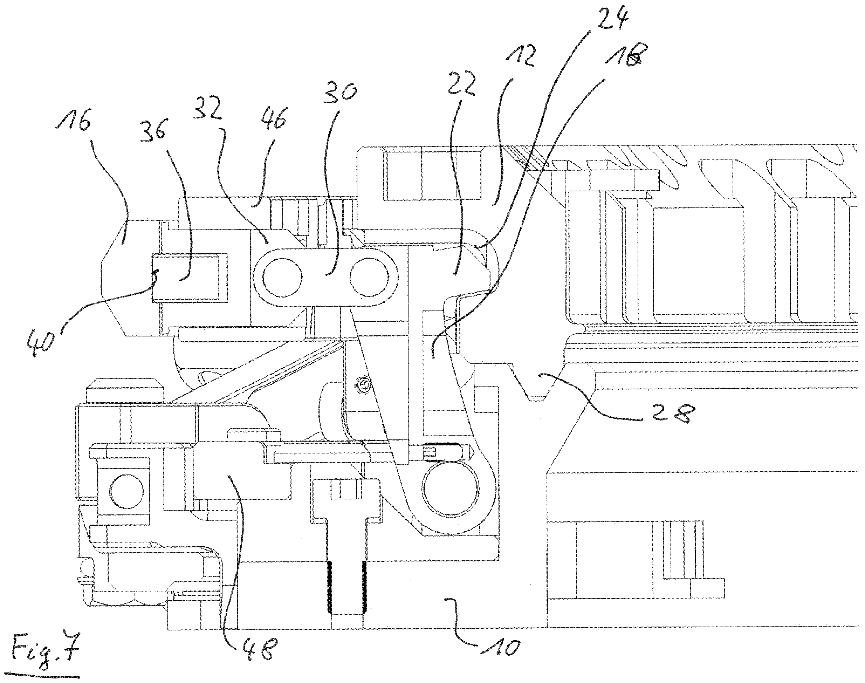

Fig. 2, 3 und 7 verdeutlichen, sind alle Rollen 34, 36 nur an ihrem radial äußersten Umfangsabschnitt in einer U-förmigen Ringnut 40 (Fig. 7) am Innenumfang des Spannrings 16 geführt. Hierdurch kann der Spannring 16 in der in Fig. 3 dargestellten Spannstellung zusammengezogen (verspannt) werden, wobei während der dabei erfolgenden Durchmesserverringerung des Spannrings 16 dieser reibungsarm an den Rollen 34 und 36 entlanggleiten kann.

Zum Verspannen des Spannrings 16 weist dieser eine, beispielsweise eine einzige, Trennstelle 42 (Fig. 1) auf. An dieser Trennstelle 42 ist der Spannring 16 mit einer Spannschraube 44 versehen, die an ihren beiden Enden jeweils gegenläufige Gewinde aufweist, die in Spannösen des Spannrings 16 eingeschraubt sind. In Fig. 1 ist zu erkennen, dass in den Spannösen drehbar gelagerte Gewindeeinsätze montiert sind, um bei einem Festziehen der Spannschraube 44 keine Biegekräfte in den Spannring 16 und die Spannschraube 44 einzuleiten. Durch Verdrehen der Spannschraube 44 lässt sich der Durchmesser des Spannrings 16 verändern, so dass dieser zusammengezogen werden kann, was wiederum eine Erhöhung der auf die Spannhebel 18 ausgeübten Spannkraft bewirkt.

Wie ein Vergleich der Fig. 2 und Fig. 3 verdeutlicht, ist der Spannring 16 bei dem dargestellten Ausführungsbeispiel in einer ausschließlich translatorischen Bewegung (parallel zur Mittelachse A) von der Spannstellung (Fig. 3) in die Freigabestellung (Fig. 2) und umgekehrt bewegbar. Wenn sich der Spannring 16 in seiner Freigabestellung befindet, sind die Hebel 30 und 32 abgeknickt und der Spannhebel 18 ist so weit verschwenkt, dass der Verriegelungsvorsprung 22 aus der Verriegelungsaussparung 24 herausgeschwenkt ist. Durch translatorisches Bewegen des Spannrings 16 aus der Freigabestellung nach oben ergibt sich die in Fig. 3 dargestellte Spannstellung. In dieser hat der Kniehebelmechanismus 30, 32 seinen Totpunkt erreicht, jedoch nicht überschritten, so dass die Schwenkachsen der Hebel 30 und 32 des Kniehebels auf einer sich orthogonal zur Mittelachse A erstreckenden Geraden angeordnet sind und der Verriegelungsvorsprung 22 des Spannhebels 18 in der Verriegelungsaussparung 24 verkeilt ist. In dieser Position können alle Spannhebel 16 durch Verdrehen der Spannschraube 44 zusätzlich in radialer Richtung mit Kraft beaufschlagt werden, um die auf die den Tragring 12 ausgeübte Spannkraft zu erhöhen. Aus diesem Zustand heraus lässt sich jedoch trotzdem der Spannring 16 in die Freigabestellung bewegen, indem der Spannring 16 parallel zur Mittelachse A in Richtung des Trägers 10 (nach unten) bewegt wird, wodurch die Kniehebel 30, 32 aus ihrer Totpunktstellung gelöst werden und aufknicken.

Zur Bewegung des Spannrings 16 in einer Richtung parallel zur Mittelachse A ist dieser mit einem ebenfalls ausschließlich translatorisch bewegbaren Hubring 46 gekoppelt, wobei der Außendurchmesser des Hubrings 46 annähernd dem Innendurchmesser des Spannrings 16 entspricht. In dem Hubring 46 sind die Rollenaufnahmen 32 in Radialrichtung schwimmend gelagert, so dass sich die Rollenaufnahmen 32 in Radialrichtung frei bewegen können. Eine Berührung zwischen Spannring 16 und Hubring 46 erfolgt dabei ausschließlich innerhalb der Ringnut 40 des Spannrings 16 über die dort befindlichen Mantelflächen der Rollen 34 und 36.

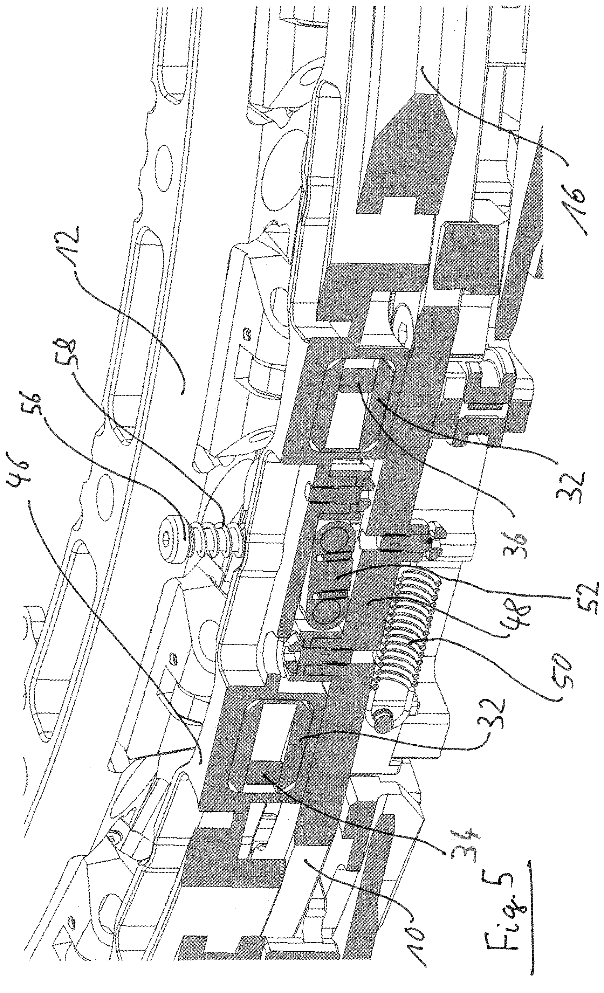

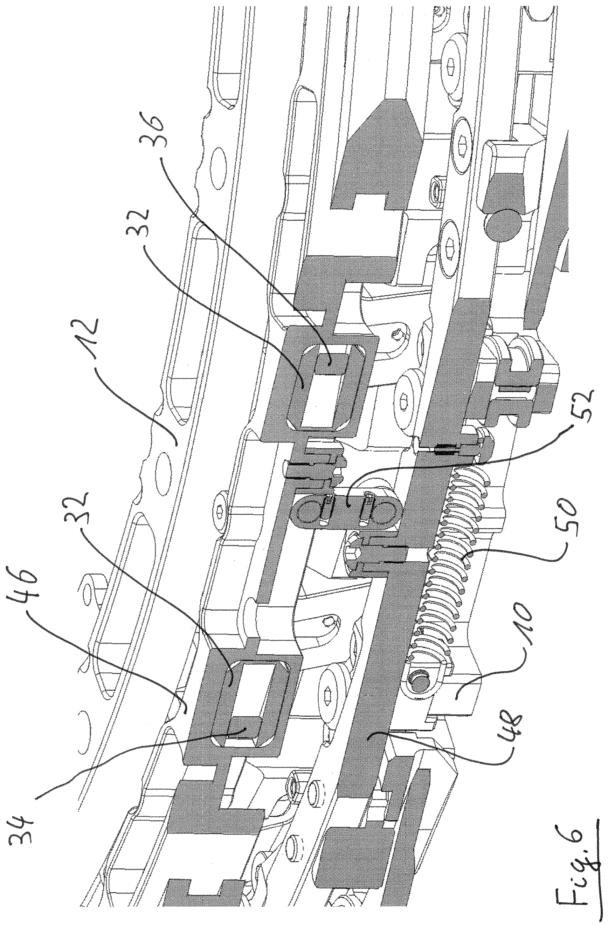

Für die translatorische Bewegung des Hubrings 46 ist ein unterhalb des Hubrings 46 angeordneter Steuerring 48 vorgesehen. Dieser ist in dem Träger 10 um die Mittelachse A drehbar gelagert und kann mit Hilfe von Federn 50 um einen vorbestimmten Drehwinkel verdreht werden, um den Hubring 46 von der Spannstellung (Fig. 3 und Fig. 6) in die Freigabestellung (Fig. 2 und Fig. 5) zu überführen. Zur Umsetzung der Rotationsbewegung des Steuerrings 48 in die Hubbewegung des Hubrings 46 sind die beiden Ringe über Schwenkhebel 52 miteinander verbunden, wobei die Schwenkhebel 52 an ihrem einen Ende an dem Steuerring 48 und an ihrem anderen Ende an dem Hubring 46 angelenkt sind. In der Freigabestellung sind die Schwenkhebel 52 unter einem kleinen spitzen Winkel relativ zu dem Steuerring 48 orientiert, so dass diese durch eine Drehbewegung des Steuerrings 48 verschwenkt werden, wenn dieser relativ zu dem Hubring 46 bewegt wird.

In der in Fig. 6 dargestellten Spannstellung sind die Spannhebel 52 rechtwinklig zu dem Steuerring 48 und dem Hubring 46 orientiert, so dass der Hubring 46 und damit auch der Spannring 16 fest in dieser Position gehalten ist. In dieser Position sind die Federn 50 gespannt und der Steuerring 48 wird in dieser gespannten Stellung von einer Auslösevorrichtung 54 (Fig. 1) gehalten, die den Steuerring 48 in dieser Position blockiert. Durch ein elektrisches Auslösesignal kann diese Blockade gelöst werden, so dass der Steuerring 48 von den Federn 50 in Umfangsrichtung um die Mittelachse A gedreht wird, woraufhin sich die Schwenkhebel 52 von der in Fig. 6 dargestellten Stellung in die in Fig. 5 dargestellte Freigabestellung bewegen. Dabei wird der um die Mittelachse A nicht verdrehbare Hubring 46 abgesenkt und der Kniehebel 30, 32 aus seiner Totpunktstellung (Fig. 3) gelöst, so dass sämtliche Spannhebel 18 den Tragring 12 freigeben.

Um bei der Bewegung des Hubrings 46 von der Spannstellung in die Freigabestellung zusätzliche Kräfte auf diesen aufzubringen, ist der Hubring 46 entlang seines Umfangs an Führungsstiften 56 geführt, die von Schraubenfedern 58 umgeben sind. Hierbei werden die Schraubenfedern 58 beim Übergang von der Freigabestellung in die Spannstellung gespannt, so dass der Hubring 46 in der Spannstellung durch die Kraft dieser Federn 58 vorgespannt ist. Nach Freigabe des Steuerrings 48 üben diese Federn parallel zur Mittelachse A eine zusätzliche Kraft auf den Hubring 46 aus, um diesen aus seiner Spannstellung in die Freigabestellung zu überführen.

Wie aus der vorstehenden Beschreibung ersichtlich ist, umgibt der Spannring 16 den Tragring 12 im Bereich seines Außenumfangs, d.h. an seiner Außenseite, wobei sich der Durchmesser des Spannrings 16 bei einem Wechsel zwischen Spannstellung und Freigabestellung nicht verändert. Der Spannring 16 muss also für eine Freigabe des Tragrings 12 nicht geöffnet oder geweitet werden. Weiterhin ist eine von dem Spannring 16 (auf die Spannhebel 18) ausgeübte Spannkraft orthogonal zur Bewegungsrichtung des Spannrings 16 orientiert, wenn dieser in die Spannstellung überführt wird. So wird der Spannring 16 beim Übergang in die Spannstellung parallel zur Mittelachse A, d.h. axial bewegt, wohingegen die von dem Spannring ausgeübte Spannkraft radial in Richtung der Mittelachse A orientiert ist.

## Patentansprüche

1. Vorrichtung (10) zum lösbaren Befestigen von Nutzlast an einem Raumfahrzeug, umfassend
- einen Träger (10) zur Befestigung an dem Raumfahrzeug,
- einen Tragring (12) zur Befestigung an der Nutzlast, und
- einen Spannring (16) mit einer Mittelachse (A), zum Verspannen des Tragringes (12) mit dem Träger (10),
**dadurch gekennzeichnet,**
**dass** der Spannring (16) entlang seiner Mittelachse (A) aus einer Spannstellung, in der Tragring (12) und Träger (10) miteinander verspannt sind, in einer insbesondere ausschließlich translatorischen Bewegung in eine Freigabestellung bewegbar ist, in welcher der Tragring (12) von dem Träger (10) lösbar ist.

2. Vorrichtung nach Anspruch 1,
**dadurch gekennzeichnet,**
**dass** der Spannring (16) mit an dem Träger (10) montierten Spannhebeln (18) in Wirkverbindung steht, die den Tragring (12) gegen den Träger (10) verkeilen.

3. Vorrichtung nach Anspruch 2,
**dadurch gekennzeichnet,**
**dass** zwischen dem Spannring (16) und jedem Spannhebel (18) ein Kniehebel (30, 32) vorhanden ist.

4. Vorrichtung nach Anspruch 3,
**dadurch gekennzeichnet,**
**dass** der Kniehebel (30, 32) in der Spannstellung seinen Totpunkt erreicht und nicht überschritten hat.

5. Vorrichtung nach einem der vorstehenden Ansprüche,
**dadurch gekennzeichnet,**
**dass** der Spannring (16) mit einem entlang der Mittelachse (A) insbesondere ausschließlich translatorisch bewegbaren Hubring (46) gekoppelt ist.

6. Vorrichtung nach Anspruch 2 und 5,
**dadurch gekennzeichnet,**
**dass** der Kniehebel (30, 32) an seinem einen Ende an dem Spannhebel (18) angelenkt ist und an seinem anderen Ende in Radialrichtung schwimmend in dem Hubring (46) gelagert ist.

7. Vorrichtung nach Anspruch 5 oder 6,
**dadurch gekennzeichnet,**
**dass** der Spannring (16) über Rollen (34, 36), insbesondere über Rollenpaare, mit dem Hubring (46) in Verbindung steht.

8. Vorrichtung nach einem der vorstehenden Ansprüche 5 bis 7,
**dadurch gekennzeichnet,**
**dass** der Hubring (46) mittels eines um die Mittelachse (A), insbesondere ausschließlich, drehbaren Steuerrings (48) bewegbar ist.

9. Vorrichtung nach Anspruch 8,
**dadurch gekennzeichnet,**
**dass** der Steuerring (48) über Schwenkhebel (52) mit dem Hubring (46) verbunden ist.

10. Vorrichtung nach einem der vorstehenden Ansprüche 8 oder 9,
**dadurch gekennzeichnet,**
**dass** der Steuerring (48) in der Spannstellung gegen die Kraft zumindest einer Feder (50) in Umfangsrichtung vorgespannt ist.

11. Vorrichtung nach einem der vorstehenden Ansprüche 5 bis 10,
**dadurch gekennzeichnet,**
**dass** der Hubring (46) in der Spannstellung gegen die Kraft zumindest einer Feder in Axialrichtung vorgespannt ist.

12. Vorrichtung nach einem der vorstehenden Ansprüche,
**dadurch gekennzeichnet,**
**dass** der Spannring (16) an einer Trennstelle (42) eine Spannschraube (44) mit zwei gegenläufigen Gewinden aufweist.

13. Vorrichtung nach einem der vorstehenden Ansprüche,
**dadurch gekennzeichnet,**
**dass** sich der Durchmesser des Spannrings (16) bei einem Übergang von der Spannstellung in die Freigabestellung nicht vergrößert.

14. Vorrichtung nach einem der vorstehenden Ansprüche,
**dadurch gekennzeichnet,**
**dass** eine von dem Spannring (16) ausgeübte Spannkraft orthogonal zu seiner Bewegungsrichtung orientiert ist.

15. Verfahren zum Befestigen und Lösen eines Tragrings (12) an einem Träger (10) eines Raumfahrzeugs, wobei der Tragring (12) mit dem Träger (10) mit Hilfe eines Spannrings (16) verspannt wird, der über Kniehebel (30, 32) mit Spannelementen (18) in Verbindung steht, die den Tragring (12) gegen den Träger (10) verspannen, wobei
zum Befestigen des Tragrings (12)
- die Kniehebel (30, 32) mit Hilfe des Spannrings (12) aus einer abgeknickten Stellung in eine Totpunktstellung überführt werden, und anschließend
- der Spannring (12) an einer Trennstelle (42) gespannt wird, und zum Lösen des Tragrings (12) von dem Träger (10)
- die Kniehebel (30, 32) aus der Totpunktstellung in eine abgeknickte Stellung überführt werden und dadurch die Spannelemente (18) von dem Tragring (12) gelöst werden.
